Europäisches Patentamt

(19) European Patent Office

Office européen des brevets

(11) Publication number: **0 016 126**
**B1**

## (12) EUROPEAN PATENT SPECIFICATION

(45) Date of publication of patent specification: **11.04.84**

(51) Int. Cl.³: **B 64 F 1/02, F 16 D 57/04, G 05 D 17/00**

(21) Application number: **79900834.7**

(22) Date of filing: **28.06.79**

(86) International application number: **PCT/US79/00459**

(87) International publication number: **WO 80/00244 21.02.80 Gazette 80/4**

(54) PROGRAMMED AIRCRAFT ARRESTING SYSTEM.

(30) Priority: **20.07.78 US 926451**

(43) Date of publication of application:
**01.10.80 Bulletin 80/20**

(45) Publication of the grant of the patent:
**11.04.84 Bulletin 84/15**

(84) Designated Contracting States:
**CH DE FR GB LU SE**

(56) References cited:
**US - A - 2 843 228**
**US - A - 3 093 352**
**US - A - 3 142 458**
**US - A - 3 317 164**
**US - A - 3 386 691**
**US - A - 3 702 177**
**US - A - 3 737 124**
**US - E - 28 736**

(73) Proprietor: **ALL AMERICAN ENGINEERING COMPANY**
**801 South Madison Street Box 1247**
**Wilmington, DE 19899 (US)**

(72) Inventor: **MYHR, Lars Halver**
**20 Golfview Drive**
**Cavalier Country Apartments Newark DE (US)**

(74) Representative: **Pedder, James Cuthbert et al,**
**J.F. WILLIAMS & Co. 34 Tavistock Street**
**London WC2E 7PB (GB)**

Courier Press, Leamington Spa, England.

## Programmed aircraft arresting system

Various programmed arrangements have been proposed for aircraft arresting systems for equalizing the arresting forces applied during payout. In other words, light restraints are initially applied while the aircraft is still travelling at a high speed and greater restraints are applied as the speed of the aircraft decreases. Examples of such programmed systems are described in U.S. Patents 2,843,288 and 3,142,458. Such systems are not as efficient as desired and are not readily adaptable to a wide range of aircraft weights and landing speeds.

A programmed aircraft arresting control system for a variable K factor energy absorber is also described in U.S. Patent 3,317,164 which corresponds to the precharacterising portion of claim 1 of the present specification. A servo-control device is operated through a regulator delivering a signal E resulting from the comparison between an assigned value $U_c$ of speed of displacement of holding cable and an instantaneous value U of speed of displacement of holding cable measured as it leaves the energy absorber. This system employs a single parameter throughout the arresting run. Thus whether there is a departure from normal deceleration early or late in the arresting run, the correcting signal is the same and the resulting control action is the same.

An object of this invention is to provide a programmed control system which efficiently arrests a wide range of aircraft weights and speeds. Another object is to provide a simple, economical and dependable type of such a system.

According to the present invention there is provided a programmed aircraft arresting control system for a variable K factor energy absorber producing a retarding torque which is equal to the K factor times the square of the speed of the input member of the energy absorber and having a movable control element which is movable into a number of positions (A, B, C) each causing the energy absorber to operate at a different K factor, the control system comprising a drive means connected to the control element for moving it into the different positions, a speed sensing means for determining the instantaneous speed of the input member as the aircraft is arrested, programming means receiving the instantaneous speed signal and delivering a signal acting upon controlling means controlling the drive means, characterised in that a distance sensing means is provided for determining the instantaneous arresting distance of the aircraft and delivering an instantaneous distance signal to the programming means said programming means having stored therein a predetermined trigger speed vs. distance curve having an initial phase and a final phase, the initial phase corresponding to an initial fraction of the arresting distance and permitting an increase in input member speed with arrested distance, the final phase corresponding to the balance of the arresting distance and requiring a decrease in input member speed with arrested distance, the programming means comparing the instantaneous speed at the instantaneous arresting distance with the trigger curve to leave the control element in a low K factor position (A) when the assigned speed value at the instantaneous arresting distance is not exceeded, and to cause the control element to be actuated to a higher K factor position (B) when the assigned speed value is exceeded.

The expression "variable K factor" as employed in this specification is defined as follows the retarding torque produced by the energy absorber is equal to the K factor times the square of the speed of the energy absorber.

In arrangements according to the present invention there is provided a programmed aircraft arresting control system for a variable K factor energy absorber having a movable control element which is movable into a number of positions, each causing the energy absorber to operate at a different K factor, and utilizing a programming means establishing a predetermined trigger speed vs. distance curve for an arrested aircraft. The trigger curve has different phases of arrestment, i.e. an initial and a final phase. A speed-sensing means, for example, a pump driven from the arresting tape reel, determines the instantaneous speed of the arrested aircraft. A comparison means, for example, a linkage driven by the pump, compares the instantaneous speed with the corresponding portion of the trigger curve of the program (for example cam and follower) whereby aircraft speeds in excess of the trigger curve are detected. An actuating means including, for example a switch between the linkage and cam follower and associated solenoid valves and electrical circuitry, causes the control shroud to move to a predetermined higher K position if the speed parameter is exceeded in a corresponding phase of arrestment. In other words, the cam has a contour which defines an initial arresting phase and a final arresting phase. The switch on the cam follower and additional follower switches, solenoid valves and circuitry are constructed and arranged to actuate the drive means to set the control element in the low K position at the beginning of the initial phase, in an intermediate position if the trigger curve is exceeded during the initial phase, and in a high K position if the trigger curve is exceeded during the final phase. The control element is moved to the high K position at the end of the final phase if it is not already there. The actuating means also includes, for example, a limit switch which defines the intermediate position and a disabling switch connected to the limit switch, which may be actuated during the final phase. The drive system has slower and faster rates of movement with the slower rate only provided during the final phase of arrestment. The drive means also, for example, may include a movable cylinder shell and a fixed piston. A rewind control causes the control element to be set in its low K position to facilitate rewind.

Novel features and advantages of the present invention will become apparent to one skilled in the art from a reading of the following description in conjunction with the accompanying drawings wherein similar reference characters refer to similar parts and in which:

Fig. 1 is a schematic diagram of a programmed aircraft arresting system, which is one embodiment of this invention in conjunction with the variable K energy absorber; and

Fig. 2 is a chart of rpm vs. payout for three different aircraft relative to a trigger rpm curve utilized on the cam shown in Fig. 1.

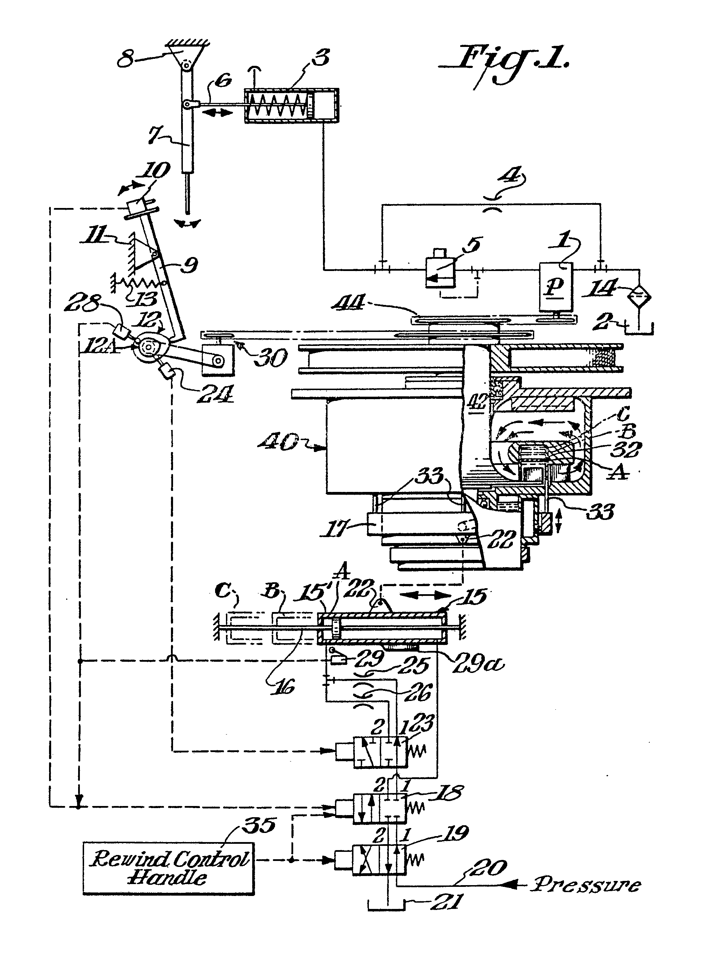

The control device shown in Fig. 1 may for example, be positioned in a housing (not shown) installed on top of the energy absorber 40 and may be anchored to its foundation by means of an unillustrated pipe bracket which also functions as a conduit for electric connectors between the control device and shroud control cylinder 15.

As shown in Fig. 1, connected to the shaft 42 of energy absorber 40 by belt transmission 44 is hydraulic pump 1 with its inlet port via filter 14 connected to reservoir 2 and with its outlet port connected to spring-returned cylinder 3. The inlet port and the outlet port of the pump 1 are connected via a fixed restriction 4 and a pressure relief valve 5.

Piston rod 6 is attached to lever 7 which pivots in fixed bracket 8. Cam follower 9 carrying microswitch 10 is pivoted around fixed bracket 11 and held against cam 12 by spring 13.

Dual cams 12 and 12A are rotated by shaft 42 of energy absorbed 40 via a gear and timing belt transmission 30 so that cam 12 rotates less than 360° for about 80 revolutions of absorber shaft 42. Three more follower switches 24, 27 and 28 are installed in contact with a smaller cam 12A.

Energy absorber 40 is, for example, of the type described in U.S. Patent Re. 28,736. The shroud mechanism disposed inside the housing of energy absorber 40 includes shroud 32 with three positioning rods 33 operated by cam ring 17. Cam ring 17 is rotated by cylinder 15. Cylinder rod 16 is fixed to the absorber housing at each end of cylinder shell 15′ which is connected to cam ring 17 via bracket 22.

The two ports of cylinder 15 are connected to pressure line 20 and reservoir 21 by way of solenoid valve 18 and solenoid valve 19. Another solenoid valve 23 is connected to one of the ports via restrictor 25 and a restrictor 26.

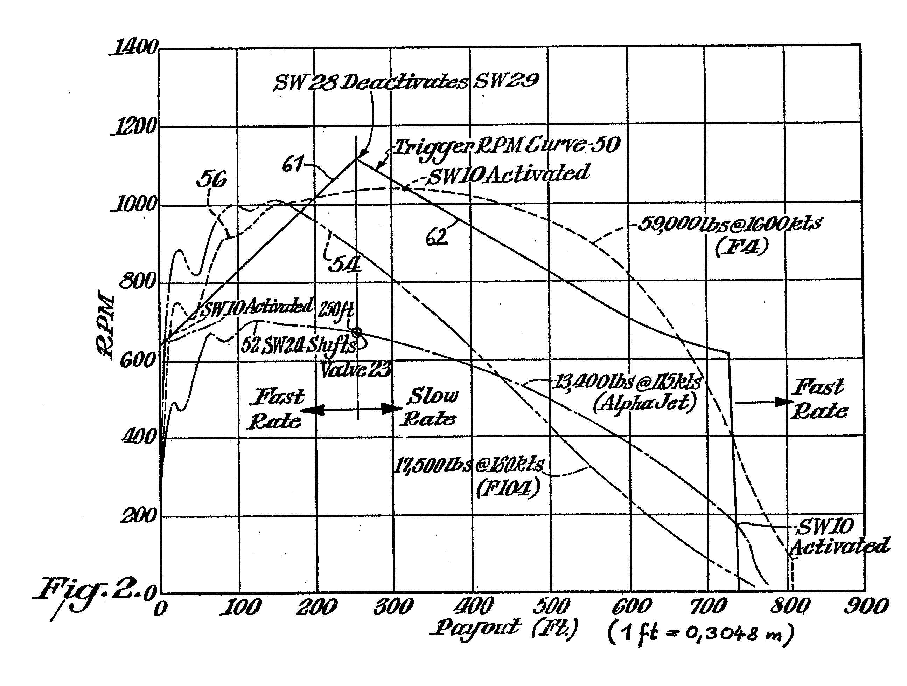

The position of lever 7 is a function of shaft rpm as a consequence of the flow-dependent pressure drop across orifice 4. The positions of cam follower 9 and switch 10 are a function of the tape payout (number of revolutions of absorber shaft 42) for a given cam 12 profile. The orifice 4 size and cams 12 and 12A profiles are matched so that switch 10 is activated when shaft rpm exceeds the trigger curve 50 in Fig. 2 for a given payout (number of revolutions of the absorber).

The status of switch 24 is a function of the tape payout.

During stand by the positions of the solenoid valves are as follows:

Valve No. 18—Position 1—No Flow
Valve No. 19—Position 1—Forward Flow
Valve No. 23—Position 1—High Flow Rate

Cylinder 15 is in its right-hand or "A" position which provides an almost closed "A" position of shroud 32 resulting in the lowest of three K-positions.

When engaging a light low-speed aircraft (Alpha-Jet), the rpm vs. payout curve as shown by curve 52 in Fig. 2 results in no status change of shroud 32 until a payout of 735 ft. (224 m) is reached. Solenoid valve 23 will, as a result of cam 12A actuating switch 24, shift to low flow rate position 2 at 250 ft. (76.2 m) payout and back again to high flow rate position 1 at 735 ft. payout. However, as a result of the position of valve 18 (no flow), this has no effect on cylinder 15 before 735 ft. payout.

When reaching 735 ft. payout, cam 12 actuates solenoid valve 18 via switch 10 causing a flow through liquid orifice 25 to the left-hand chamber of cylinder 15 moving shell 15′ to the left, fully opening shroud 32 to the "C" (maximum K) position.

As shown in Fig. 2, switch 28 through cam 12A had previously overridden switch 29 and thus allows shroud 32 to open completely resulting in the maximum K-factor at the end of the runout.

Restrictions 25 and 26 provide different cylinder 15 velocities and cam 12A is designed to activate solenoid 23 to its position 2 via switch 24 at 250 ft. payout and to deactivate solenoid 23 so that it returns to its position at 735 ft. payout.

When engaging a medium weight high speed aircraft (F-104), the rpm vs. payout curve 54 shown in Fig. 2 results in an early (before 250 ft. payout) crossover of the trigger rpm curve. Solenoid valve 23 is consequently in position 1 when switch 10 shifts solenoid valve 18 to flow. This results in a high rate of K-increase (through restrictor 25). When the intermediate K-factor is reached, switch 29 is activated to shift valve 18 back to "no flow" and stop cylinder shell 15′.

When a payout of 735 ft. is reached, cylinder shell 15′ and shroud 32 are moved to their "C" positions and the K-factor is increased to its highest value, in the same way as for curve 52.

When engaging with a heavy weight high speed aircraft (F-4) the rpm vs. payout curve 56 shown in Fig. 2, results in an early crossover (before 250 ft. payout) followed by a late (after 250 ft. payout) crossover of the trigger rpm curve.

Before 250 ft. payout, solenoid valve 23 is in position 1 when switch 10 shifts solenoid valve 18 to flow. This results in a fast K-increase (through restrictor 25). When the intermediate K-factor is reached, switch 29 is activated by contact with projection 29a on cylinder 16, shifting valve 18 back to no flow to stop cylinder shell 15′ in the "B" position. Reaching a payout of 250 ft. cam 12A actuates switch 24 shifting valve 23 to position 2 in which there is a lower rate of K-increase (through orifice 26) when switch 10 is actuated at the second crossover. Also at that 250 feet payout, switch 28 overrides switch 29, so that at the second crossover, the opening of valve 18 causes shell 15′ and shroud 32 to move to their "C" positions. The K-factor increases to its maximum value and consequently no reaction occurs at the third crossover (after 735 ft. payout) except that switch 24 shifts valve 23 back to position 1.

During rewinding after an arrest, a switch in rewind control handle 35 actuates valves 18 and 19 to position 2 resulting in a closing of shroud 32 to the "A" (low K) position. After completing rewinding and pretensioning, all valves are automatically reset to their standby position.

Fig. 2 shows the foregoing four curves. Peaked trigger rpm curve 50 has two portions 61, 62 and represents the contours of dual cams 12 and 12A. It accordingly establishes speed limits for the arrested aircraft through payout expressed in rpm of the tape reel. The maximum speed of approximately 1100 rpm is established at 250 ft. of payout. The contours of curve 50 are developed to accommodate an engagement made at the velocity of 170 knots (315 km/h) with a constant deceleration of 1.5 G maximum with no dynamic peaks for the heaviest aircraft and a landing speed of 138 knots (256 km/h) of 1.0 G deceleration maximum for the lightest aircraft. Decelerations are maintained below 1.5 G for all other aircraft.

The landing speed of the lightest aircraft is represented in Fig. 2 by a curve 52 which represents the landing speed of an Alpha jet weighing 13,400 lbs (6078 kg) and landing at approximately 115 knots (213 km/h). It crosses over trigger curve 50 only at the end of payout when shroud 32 is shifted into the "C" or high K position.

Curve 54 represents the landing speed of an intermediate weight F 104 weighing 17,500 lbs (7938 kg) landing at 180 knots (333.5 km/h). This curve crosses over trigger curve 50 at about 10 feet (3.05 m) of payout when cylinder shell 15′ and shroud 32 are moved into their intermediate "B" positions to provide an intermediate K factor for the energy absorber throughout the remainder of payout until the final crossover provides the high K position.

Curve 56 on Fig. 2 represents a heavy weight F-4 aircraft weighing 59,000 lbs (26762 kg) and landing at 160 knots (296.5 km/h). It crosses over trigger curve 50 at about 20 feet (6.1 m) of payout to shift shroud 32 into the "B" intermediate K position. It again crosses over trigger curve 50 at about 320 ft. (97.5 m) to cause cylinder shell 15′ shroud 32 and energy absorber 40 to move into the extreme high K position throughout the remainder of the arrestment.

The G forces applied to light, intermediate and heavy aircraft are thus maintained approximately between 1.0 and 1.5 G throughout their arrestment utilizing a single program.

## Claims

1. A programmed aircraft arresting control system for a variable K factor energy absorber (40) producing a retarding torque which is equal to the K factor times the square of the speed of the input member (42) of the energy absorber and having a movable control element (17) which is movable into a number of positions (A, B, C) each causing the energy absorber (40) to operate at a different K factor, the control system comprising a drive means (15) connected to the control element (17) for moving it into the different positions, a speed sensing means (1—7) for determining the instantaneous speed of the input member (42) as the aircraft is arrested, programming means (9—13, 12A, 24, 28, 29) receiving the instantaneous speed signal and delivering a signal acting upon controlling means (18—26) controlling the drive means (15), characterised in that a distance sensing means (30) is provided for determining the instantaneous arresting distance of the aircraft and delivering an instantaneous distance signal to the programming means (9—13, 12A, 24, 28, 29) said programming means having stored therein a predetermined trigger speed vs. distance curve (50) having an initial phase (61) and a final phase (62), the initial phase corresponding to an initial fraction of the arresting distance and permitting an increase in input member speed with arrested distance, the final phase corresponding to the balance of the arresting distance and requiring a decrease in input member speed with arrested distance, the programming means comparing the instantaneous speed at the instantaneous arresting distance with the trigger curve (50) to leave the control element (17) in a low K factor position (A) when the assigned speed value at the instantaneous arresting distance is not exceeded, and to cause the control element (17) to be actuated to a higher K factor position (B) when the assigned speed value is exceeded.

2. A system according to claim 1 in which the trigger curve (50) permits no aircraft travel just before the end of the arresting distance.

3. A system according to claim 1 or 2 in which the energy absorber (40) has three different K factor positions (A, B, C), a low K factor position (A) being arranged to be connected for use when the trigger curve is not exceeded, and two higher K factor positions (B, C) being arranged to be connected for use when the curve is exceeded.

4. A system according to claim 3 in which one (B) of the three K factor positions provides a K factor intermediate those of the other two positions, the intermediate K factor position being arranged to be connected for use when the initial phase (61) of the trigger curve (50) is exceeded.

5. A system according to claim 3 or 4 in which the highest K factor position is arranged to be connected for use just before the end of the arresting distance.

6. A system according to any preceding claim in which the control element (17) is connected for movement at different rates (valve 23) from the low K factor position to the higher K factor position(s), the faster rate (position 1) being in effect during the first phase of the trigger curve (50) and also when the curve permits no aircraft travel.

7. A system according to any preceding claim, in which the initial phase (61) of the trigger curve (50) ends at 250 feet (76,2 m) of the arresting run.

**Patentansprüche**

1. Programmiertes Steuersystem zum Aufhalten eines Flugzeugs für einen einen variablen K-Faktor aufweisenden Energieabsorber (40), der ein Verzögerungsdrehmoment erzeugt, das gleich dem K-Faktor mal dem Quadrat der Geschwindigkeit des Eingangsgliedes (42) des Energieabsorbers ist, und der ein bewegliches Steuerelement (17) aufweist, das in eine Anzahl von Positionen (A, B, C) bewegbar ist, von denen jede bewirkt, daß der Energieabsorber (40) mit einem unterschiedlichen K-Faktor arbeitet, wobei das Steuersystem eine Antriebsvorrichtung (15), die mit dem Steuerelement (17) zur Bewegung desselben in die unterschiedlichen Positionen verbunden ist, eine Geschwindigkeitsabfühlvorrichtung (1—7) zum Bestimmen der Augenblicksgeschwindigkeit des Eingangsgliedes (42), während das Flugzeug aufgehalten wird, sowie Programmiervorrichtungen (9—13, 12A, 24, 28, 29) aufweist, die das Augenblicksgeschwindigkeitssignal empfangen und ein Signal abgeben, das auf Steuervorrichtungen (18—26) wirkt, die die Antriebsvorrichtung (15) steuern, dadurch gekennzeichnet, daß eine Wegabtastvorrichtung (30) vorgesehen ist zum Bestimmen des augenblicklichen Aufhalteweges des Flugzeugs und zum Abgeben eines Augenblickswegsignals an die Programmiervorrichtungen (9—13, 12A, 24, 28, 29), wobei die Programmiervorrichtungen eine vorbestimmte Triggergeschwindigkeit-/Wegkurve (50) gespeichert haben, mit einer Anfangsphase (61) und einer Endphase (62), wobei die Anfangsphase einem anfänglichen Bruchteil des Aufhalteweges entspricht und ein Ansteigen der Eingangsgliedgeschwindigkeit mit dem Aufhalteweg erlaubt, wobei die Endphase dem Ausgleich des Aufhalteweges entspricht und eine Verringerung der Eingangsgliedgeschwindigkeit mit dem Aufhalteweg erfordert, wobei die Programmiervorrichtungen die Augenblicksgeschwindigkeit bei einem Augenblicksaufhalteweg mit der Triggerkurve (50) vergleichen, um das Steuerelement (17) in einer niedrigen K-Faktor-Position (A) zu halten, wenn der zugeordnete Geschwindigkeitswert beim Augenblicksaufhalteweg nicht überschritten ist, und um zu bewirken, daß das Steuerelement (17) in eine höhere K-Faktor-Position (B) gebracht wird, wenn der zugeordnete Geschwindigkeitswert überschritten wird.

2. System nach Anspruch 1, bei dem die Triggerkurve (50) gerade bevor dem Ende des Aufhalteweges keine Flugzeugbewegung erlaubt.

3. System nach Anspruch 1 oder 2, bei dem der Energieabsorber (40) drei unterschiedliche K-Faktor-Positionen (A, B, C) besitzt, wobei die niedrige K-Faktor-Position (A) angeordnet ist, um in Wirkverbindung gebracht zu werden, wenn die Triggerkurve nicht überschritten wird, und die beiden höheren K-Faktor-Positionen (B, C) angeordnet sind, um in Wirkverbindung gebracht zu werden, wenn die Kurve überschritten wird.

4. System nach Anspruch 3, bei der eine (B) der drei K-Faktor-Positionen einen K-Faktor bestimmt, der zwischen denjenigen der beiden anderen Positionen liegt, wobei die Zwischen-K-Faktor-Position angeordnet ist, um in Wirkverbindung zu kommen, wenn die Anfangsphase (61) der Triggerkurve (50) überschritten wird.

5. System nach Anspruch 3 oder 4, bei dem die höchste K-Faktor-Position angeordnet ist, um in Wirkverbindung gerade vor dem Ende des Aufhalteweges zu kommen.

6. System nach einem der vorhergehenden Ansprüche, bei dem das Steuerelement (17) für eine Bewegung mit unterschiedlichen Geschwindigkeiten (Ventil 23) von der niedrigen K-faktor-Position zu der bzw. den höheren K-Faktor-Position(en) verbunden ist, wobei die höhere Geschwindigkeit (Position 1) während der ersten Phase der Triggerkurve (50) und auch dann in Wirkung ist, wenn die Kurve keine Flugzeugbewegung erlaubt.

7. System nach einem der vorhergehenden Ansprüche, bei dem die Anfangsphase (16) der Triggerkurve (50) bei 250 Fuß (76,2 m) des Aufhalteweges endet.

## Revendications

1. Système programmé de commande de freinage d'aéronef par barrière d'arrêt, destiné à un organe d'absorption d'énergie (40) à facteur K variable produisant un couple de ralentissement qui est égal au produit du facteur K par le carré de la vitesse de l'élément d'entrée (42) de l'organe d'absorption d'énergie et possédant un élément de commande mobile (17) qui peut être amené dans un certain nombre de positions (A, B, C) faisant chacune que l'organe d'absorption d'énergie (40) fonctionne avec un facteur K différent, le système de commande comprenant un moyen d'entraînement (15) connecté à l'élément de commande (17) afin de le déplacer jusque dans les différentes positions, un moyen (1—7) capteur de vitesse servant à déterminer la vitesse instantanée de l'élément d'entrée (42) pendant que l'aéronef est freiné par la barrière d'arrêt, un moyen de programmation (9—13, 12A, 24, 28, 29) recevant le signal de vitesse instantané et délivrant un signal qui agit sur un moyen de commande (18—26) commandant le moyen d'entraînement (15), caractérisé en ce qu'un moyen (30) capteur de distance est destiné à déterminer la distance de freinage instantanée de l'aéronef et à délivrer un signal de distance instantané au moyen de programmation (9—13, 12A, 24, 28, 29), ledit moyen de programmation emmagasinant en mémoire une courbe (50) prédéterminée figurant la vitesse de déclenchement en fonction de la distance qui possède une phase initiale (61) et une phase finale (26), la phase initiale correspondant à une fraction initiale de la distance de freinage et autorisant une augmentation de la vitesse de l'élément d'entrée avec la distance freinée, la phase finale correspondant à l'équilibrage de la distance de freinage et demandant une diminution de la vitesse de l'élément d'entrée avec la distance freinée, le moyen de programmation comparant la vitesse instantanée associée à la distance de freinage instantanée avec la courbe de déclenchement (50) de façon à laisser l'élément de commande (17) dans une position (A) à facteur K bas lorsque la valeur de vitesse assignée à la distance de freinage instantanée n'est pas dépassée, et à faire que l'élément de commande (17) soit activé à une position (B) à facteur K supérieur lorsque la valeur de vitesse assignée est dépassée.

2. Système selon la revendication 1, dans lequel la courbe de déclenchement (50) n'autorise aucune avance de l'aéronef just avant la fin de la distance de freinage.

3. Système selon la revendication 1 ou 2, dans lequel l'organe d'absorption d'énergie (40) possède trois positions (A, B, C) à facteurs K différents, une position (A) à facteur K bas étant destinée à être connectée en utilisation lorsque la courbe de déclenchement n'est pas dépassée, et deux positions (B, C) à facteurs K supérieurs étant destinées à être connectées en utilisation lorsque la courbe est dépassée.

4. Système selon la revendication 3, dans lequel l'une (B) des trois positions associées aux facteurs K fournit un facteur K qui est compris entre ceux des deux autres positions, la position à facteur K intermédiaire étant destinée à être connectée en utilisation lorsque la phase initiale (61) de la courbe de déclenchement (50) est dépassée.

5. Système selon la revendication 3 ou 4, dans lequel la position associée au facteur K le plus élevé est destinée à être connectée en utilisation juste avant la fin de la distance de freinage.

6. Système selon l'une quelconque des revendications précédentes, dans lequel l'élément de commande (17) est connecté en mouvement à des débits différents (soupape 23) pour la position à facteur K bas et pour la ou les positions ayant des facteurs K supérieurs, le débit le plus rapide (position 1) étant effectif pendant la première phase de la courbe de déclenchement (50), ainsi que lorsque la courbe n'autorise aucune avance de l'aéronef.

7. Système selon l'une quelconque des revendications précédentes, dans lequel la phase initiale (61) de la courbe de déclenchement (50) se termine à 250 pieds (76,2 m) de la course de freinage.

*Fig.1.*

Fig. 2.

0 016 126